# EUROPEAN PATENT APPLICATION

(11) **EP 4 742 113 A1**
(43) Date of publication of application: **13.05.2026**
(21) Application number: 24211197.9
(22) Date of filing: 06.11.2024
(51) Int. Cl.: G06N 10/40

(54) **FAST MULTI-PHOTON QUANTUM GATES FOR OPTICAL QUBITS AND QUTRITS**

(71) Applicant: Max-Planck-Gesellschaft zur Förderung der Wissenschaften e.V., 80539 München (DE); Ludwig-Maximilians-Universität München, in Vertretung des Freistaates Bayern, 80539 München (DE)
(72) Inventor: BLOCH, Immanuel, 85748 Garching (DE); ZEIHER, Johannes, 85748 Garching (DE); TAO, Renhao, 80539 München (DE); GYGER, Flavien, 85748 Garching (DE); AMMENWERTH, Maximilian, 85748 Garching (DE); TIMME, Hendrik, 85748 Garching (DE)
(74) Representative: Bardehle Pagenberg Partnerschaft mbB Patentanwälte Rechtsanwälte

(57) **Abstract**

The present disclosure relates to a system for performing a quantum manipulation protocol, e.g., a quantum computing algorithm, the system comprising: a trapping laser system for trapping neutral atoms in an optical trap array inside a vacuum chamber operated at a trapping wavelength λₜᵣ, wherein each neutral atom comprises a ground state |¹Sₒ>, a first metastable excited state |³Pₒ> and a second metastable excited state |³P₂>. The system further comprises a state manipulation laser system for generating laser radiation for coupling, via a phase-coherent multi-photon transition, the ground state |¹Sₒ> to the first metastable excited state |³Pₒ> and / or to the second metastable excited state |³P₂> as well as a magnetic field system for generating a magnetic field Bₑₓₜ at a location of the optical trap array inducing a Zeeman splitting for magnetic substates of the second metastable excited state |³P₂>. The system further comprises a control system for controlling the laser radiation generated by the laser system to coherently modify a quantum state of the plurality of neutral atoms based on the quantum manipulation protocol and a a quantum state readout system for determining the quantum state of at least a subset of the plurality of neural atoms based on the quantum manipulation protocol. According to some aspects, a direction of the magnetic field Bₑₓₜ with respect to a polarization direction of the optical trap array is selected such as to render the optical trap array operated at the trapping wavelength λₜᵣ a magic-wavelength optical trap for the second metastable excited state |³P₂> and the first metastable excited state |³Pₒ> and / or for the second metastable excited state |³P₂> and the ground state |¹Sₒ> or both.

## Description

### FIELD OF INVENTION

Aspects of the present disclosure relate to quantum technologies using neutral atoms in optical traps as qubits and / or qutrits, and more particularly to techniques, systems, and devices for fast and high-fidelity qubit and / or qutrit state manipulation in engineered trapping potentials without state-dependent light-shifts.

### INTRODUCTION

Quantum technologies, including quantum computers, optical lattice clocks, and / or analog quantum simulators, can outperform classical devices in several applications. In neutral atom-based implementations of such quantum technologies, long-lived internal states of neutral atoms trapped in optical potentials, such as optical tweezer arrays or optical lattices may be used. Neutral atom-based quantum computers, simulators and / or (optical) atom clocks typically trap neutral atoms (i.e. electrically neutral atoms) in optical potentials (e.g. in arrays of optical dipole traps or in optical lattices or combinations thereof), and use two or more long-lived (with respect to operation time) internal (electronic) states for performing quantum manipulation protocols such as a sequence of quantum gates of a quantum comptuting algorithm. The selected states of the atoms may thus form the states of a qubit and / or qutrit.

Such quantum manipulation systems typically require precise control over the internal states of the neutral atoms to perform high-fidelity operations such as single qubit gates, Ramsey sequences, etc. For example, quantum computers use physical qubits to store the basic unit of information and perform quantum gates on the qubits to process the stored information, e.g. according to processing instructions of a quantum computing algorithm. Running quantum algorithms requires single- and two-qubit gates, which are the basic computation operations acting on individual qubits and individual pairs of qubits, respectively. However, achieving fast and coherent manipulations of such internal states in large quantum registers of neutral atoms still present significant challenges.

### SUMMARY

One of the main challenges in neutral atom-based quantum technology devices is the requirement for so-called magic trapping conditions (e.g. see: S. Zhang, F. Robicheaux, and M. Saffman: *Magic-wavelength optical traps for Rydberg atoms; arXiv:1106.246302 [physics.atom*-*ph]* for general background in this field of technology), where a differential light shift caused by an optical trapping potential between two or more internal states of neutral atoms essentially vanishes (e.g., on time and precision scales relevant for the specific implementation). Such a constraint typically either limits the choice of trapping wavelengths or necessitates specifically engineered trapping potentials. In addition, driving optical clock transitions, e.g., in alkaline earth (like) atoms such as Yb and Sr typically requires significant optical power due to the weak optical coupling on the clock transition, which can lead to spurious light shifts, exacerbate lift-shift induced dephasing and thus may limit quantum operation fidelity. More specifically, ensembles of neutral atoms in optical tweezer arrays or optical lattices are a promising approach for realizing neutral-atom based quantum technologies. The dominant platforms use laser pulses to coherently manipulate the neutral atoms, either for quantum information processing or, for example, sensing, metrology, and / or analog quantum simulation. For example, in ⁸⁸Sr, established techniques exploit long-lived clock states coherently coupled to the electronic ground state. Driving the corresponding *clock transitions* typically requires suitable trapping conditions with vanishing differential light shifts (so-called *"magic-wavelength"* conditions), which constrain the choice of the trapping wavelength of the optical trap array.

A known example of such a trapping configuration is the *magic wavelength* at 813 nm used in modern optical atomic clocks based on Strontium atoms. Alternatively, magic trapping conditions can be engineered with suitable combinations of trap polarization and magnetic fields, as demonstrated recently in several quantum physics experiments (see for example: S. Pucher, et all. Fine-Structure Qubit Encoded in Metastable Strontium Trapped in an Optical Lattice Phys. Rev. Lett. 132, 150605).

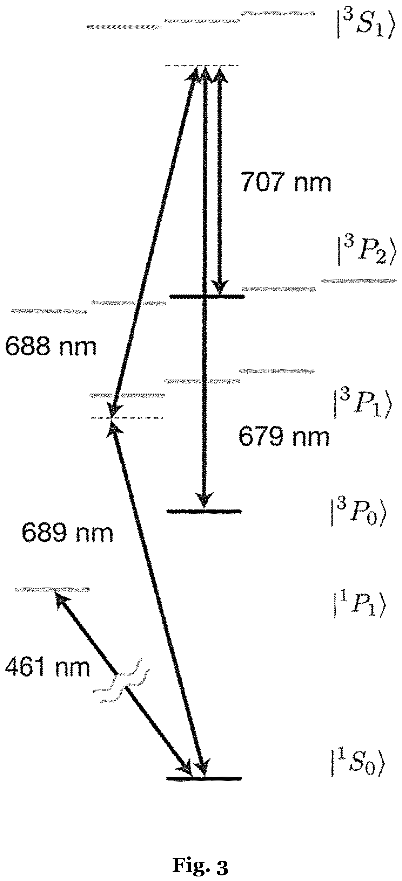

Further, it is found that driving an optical clock transition even at magic-wavelength trapping conditions typically requires significant laser power, due to the weak (strictly speaking vanishing) optical coupling on the clock transition (e.g., the |¹S₀> to |³P₀> transition shown in **Fig. 3**). The large, required laser power constitutes a significant bottleneck, as it also is accompanied by spurious light shifts due to nearby levels that limit the achievable operation quality in realistic experimental settings. Further, applying strong magnetic fields at arbitrary angles as required for magic angle tuning is experimentally challenging, which limits the degree to which angle-tuned magic wavelength traps can be utilized for applications.

To address such and similar issues of neutral atom-based quantum technologies, in a first aspect, the present disclosure relates to a system for performing a quantum manipulation protocol, the system comprising a trapping laser system for trapping neutral atoms (e.g., alkaline earth atoms such as Sr or Yb) in an optical trap array inside a vacuum chamber operated at a trapping wavelength λₜᵣ (e.g., 813nm, 100nm, etc.), wherein each neutral atom comprises a ground state |¹S₀>, a first metastable excited state |³P₀> and a second metastable excited state |³P₂>. The system further comprises a state manipulation laser system for generating laser radiation for coupling, via a phase-coherent multi-photon transition, the ground state |¹S₀> to the first metastable excited state |³P₀> and / or to the second metastable excited state |³P₂> as well as a magnetic field system for generating a magnetic field Bₑₓₜ at a location of the optical trap array inducing a Zeeman splitting for magnetic substates of the second metastable excited state |³P₂>, wherein a direction of the magnetic field Bₑₓₜ with respect to a polarization direction of the optical trap array is selected such as to render the optical trap array operated at the trapping wavelength λₜᵣ a magic-wavelength optical trap for the second metastable excited state |³P₂> and the first metastable excited state |³P₀> and / or for the second metastable excited state |³P₂> and the ground state |¹S₀>. The system further comprises a control system for controlling the laser radiation generated by the laser system to coherently modify a quantum state of the plurality of neutral atoms based on the quantum manipulation protocol and a quantum state readout system for determining the quantum state of at least a subset of the plurality of neural atoms based on the quantum manipulation protocol.

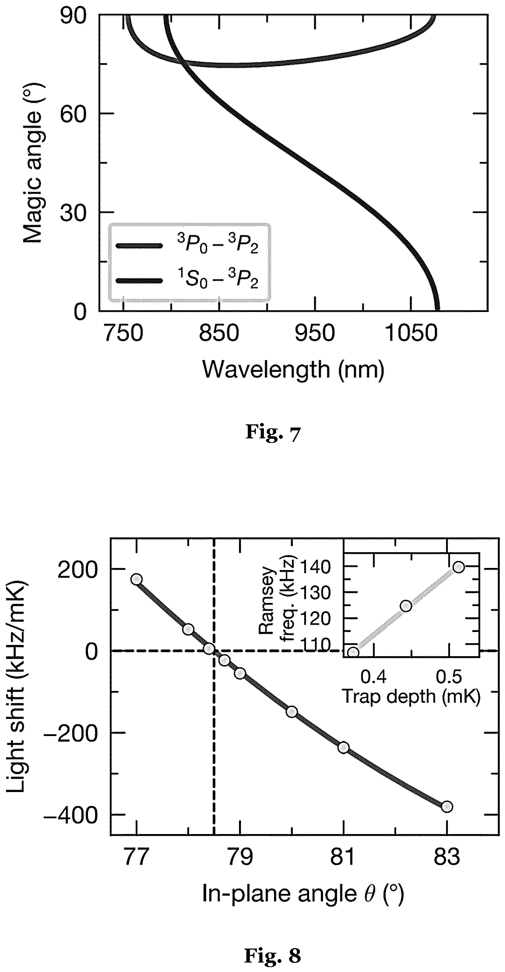

In some implementations, as illustrated in **Fig. 7** and **Fig. 8** discussed below, it is possible to select the direction of the magnetic field with respect to the polarization direction as well as the trapping wavelength λₜᵣ of the optical trap array such that a triple-magic-wavelength trap ca be realized for the second metastable excited state |3P₂>, the first metastable excited state |3P₁> and the ground state |¹S₀>.

Thus, aspects of the present disclosure overcome typical limitations as discussed above an enable fast optical coupling compatible with engineered trapping potentials with essentially vanishing differential light shifts.

Advantages include substantially improved coherence times suitable for quantum technology applications under these conditions. Exploiting the flexibility the present disclosure, allows to realize a triple-magic trap for alkaline earth atoms such as Sr. In the context of quantum computing, this offers the exceptional possibility of dynamically mapping qubit information onto different states to exploit either the faster and recoil-free coupling of the fine-structure states (e.g., of the second metastable excited state |³P₂> and the first metastable excited state |³P₀>) or the exceptionally long coherence times of the first metastable excited state |³P₀> with respect to the ground state |¹S₀>.

Furthermore, in the context of quantum metrology, the present disclosure enables direct access to both clock transitions (i.e. the |¹S₀> to |³P₀> transition and the |¹S₀> to |³P₂> transition) using the same hardware system. Additionally, in the context of quantum sensing, the use of dynamical decoupling sequences enables the tailoring of the sensor's sensitivity for specific frequency ranges.

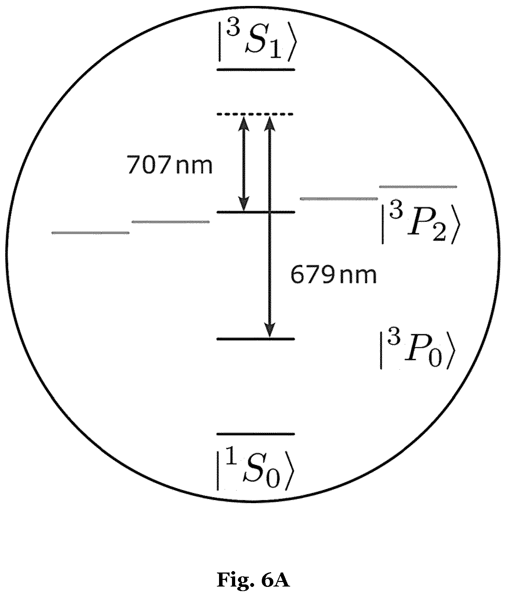

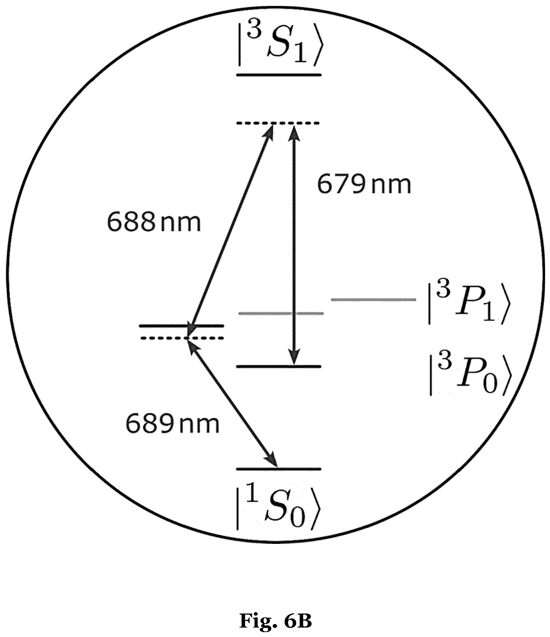

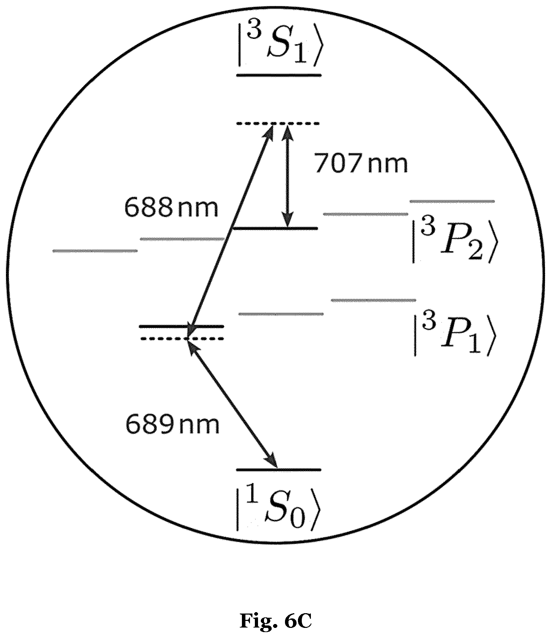

Such and similar applications are enabled by the combination of angle-tuned trapping potentials with coherent and fast all-to-all optical couplings (see **Fig 6A** to **Fig. 6C**), which offers new flexibility in engineering trapping potentials without sacrificing optical coupling strength.

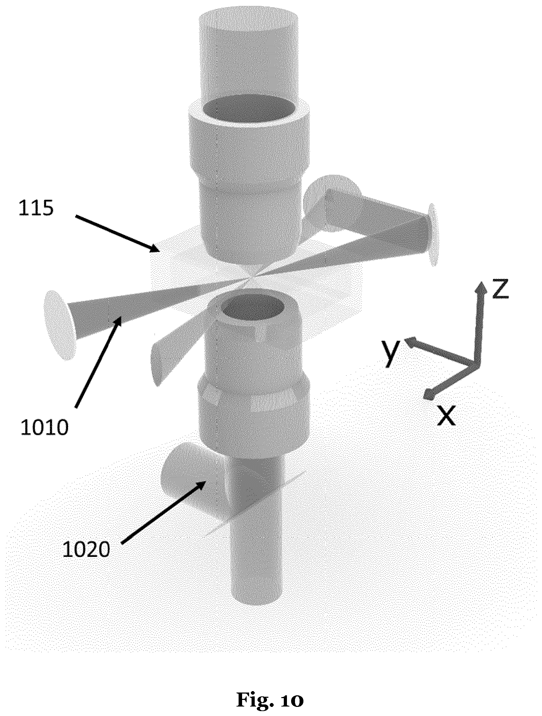

As a further advantage, exploiting this flexibility, an addressable 90° magic lattice setup providing a particularly power-efficient, scalable platform for neutral atom processors can be realize (see **Fig. 10**). For example, using a suitable range of trapping wavelengths, a magic-wavelength trap can be realized simultaneously for a horizontally installed optical lattice and for orthogonally propagating optical addressing beams, e.g., enabling the coherent transport of atoms within the quantum register. The present disclosure also relates to a corresponding method for quantum computing as specified in the appended claims as well as to further implementation details as well specified in the dependent claims.

Further details, aspects and advantages of the present disclosure are discussed below with reference to the drawings and are the subject of the claims which define the scope of the present disclosure.

### BRIEF DESCRIPTION OF THE DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only some typical aspects of this disclosure and are therefore not to be considered limiting of its scope, for the description may admit to other equally effective aspects. The same reference numbers in different drawings may identify the same or similar elements.
**FIG. 1** illustrates aspects of a system for trapping and manipulating neutral atoms for quantum computing, metrology, simulation and / or sensing applications according to a possible implementation of the present disclosure.
**Fig. 2** illustrates a block diagram of a system for performing a quantum manipulation protocol, such as a quantum computing algorithm according to aspects of the present disclosure.
**FIG. 3** shows an atomic level scheme with multi-photon laser couplings for the bosonic strontium isotope ⁸⁸Sr that can be used as qubit and / or qutrit in some implementations of the present disclosure.
**FIG. 4** illustrates aspects of a system for generating a magnetic field at the location of the optical trap array inside a vacuum chamber according to aspects of the present disclosure.
**FIG. 5** illustrates aspects of magic-angle tuning / trap engineering according to aspects of the present disclosure for a single optical tweezer trap.
**FIG. 6A to Fig 6C** illustrate three exemplary multi-photon coupling schemes that can be used for fast quantum gates / state manipulations according to aspects of the present disclosure.
**FIG. 7** illustrates the magic angle for different pairs of states as function of the trapping wavelength. The top trace corresponds to the first line in the box inset and the lower trace to the second line.
**FIG. 8** illustrates measurements of light shifts as function of the magic angle for the scalar magic wavelength 813 nm to identify conditions for a triple-magic-wavelength trap.
**FIG. 9** illustrates measurements of light shift as function of trapping wavelengths for an angle of 90°.
**Fig. 10** illustrates further aspects of a system for trapping and manipulating neutral atoms for quantum computing, metrology and / or sensing applications according to a possible implementation of the present disclosure using a folded optical lattice and optical tweezer traps.
**FIG. 11** shows a process diagram of a quantum computing method according to a possible implementation of the present disclosure.
**FIG. 12** shows coherence measurements of the fine-structure qubit according to a possible implementation of the present disclosure.

### DESCRIPTION OF ILLUSTRATIVE EXAMPES

Various aspects of the present disclosure are described in more detail hereinafter with reference to the accompanying drawings. The present disclosure may, however, be implemented in many different forms and should not be construed as limited to any specific structure or function presented herein. Rather, these aspects are provided so that this disclosure will be thorough and complete, and will fully convey the scope of the present disclosure to those skilled in the art. Based on the teachings herein one skilled in the art should appreciate that the scope of the present disclosure is intended to cover any aspect of the present disclosure disclosed herein, whether implemented independently of or combined with any other aspect of the present disclosure. For example, a device or system may be implemented, or a method may be practiced using any number of the aspects set forth herein. In addition, the scope of the present disclosure is intended to cover such a device, system or method which is practiced using other structure, functionality, or structure and functionality in addition to or other than the various aspects of the present disclosure set forth herein. Any aspect of the present disclosure disclosed herein may be implemented by one or more elements of a claim. While specific feature combinations are described in the following with respect to certain aspects of the present disclosure, it is to be understood that not all features of the discussed examples must be present for realizing the technical advantages of the devices, systems, methods and computer programs disclosed herein. Disclosed aspects may be modified by combining certain features of one aspect with one or more features of other aspects. A skilled person will understand that features, steps, components and / or functional elements of one aspect can be combined with compatible features, steps, components and / or functional elements of any other aspect of the present disclosure.

Several aspects of quantum computation, metrology and / or simulation with neutral atoms will now be presented with reference to various devices, systems and methods that are described in the following detailed description and illustrated in the accompanying drawings by various blocks, modules, components, circuits, steps, processes, algorithms, and/or the like (collectively referred to as "elements"). These elements may be implemented using hardware, software, or combinations thereof. Whether such elements are implemented as hardware or software depends upon the particular application and design constraints imposed on the overall system.

While aspects of the present disclosure are presented in the following using the bosonic Strontium isotope ⁸⁸Sr, it is to be understood, that any other species of neutral atom with a suitable internal level structure may also be used in other implementations of the present disclosure.

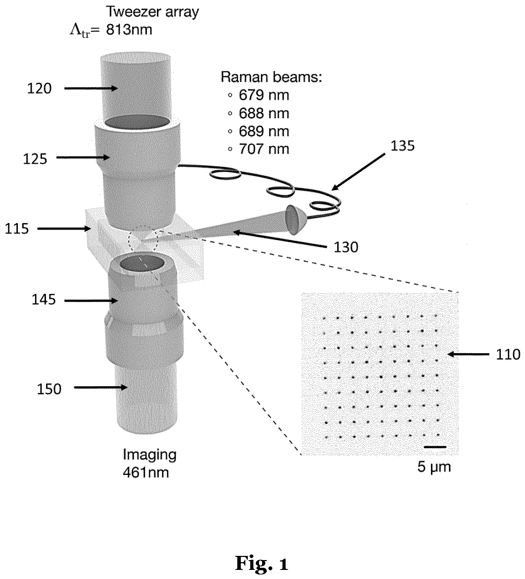

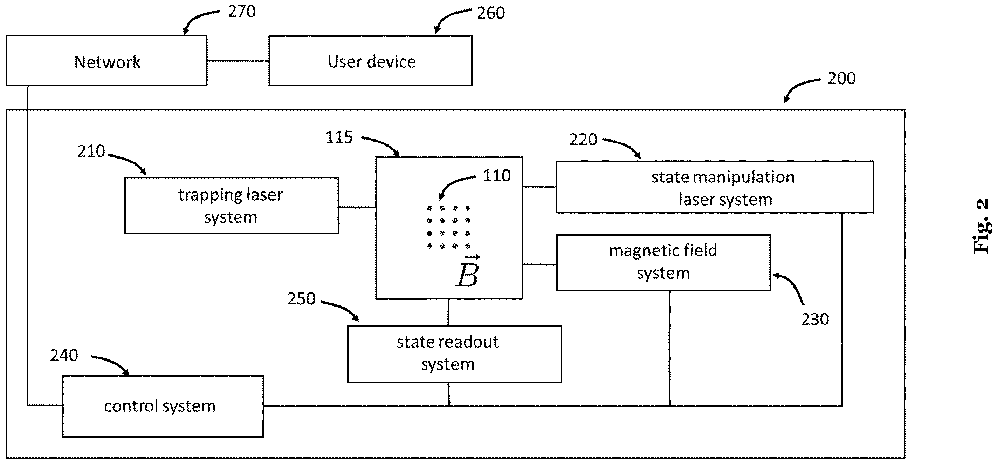

**FIG. 1** shows aspects of a system for performing a quantum manipulation protocol, e.g., a neutral atom-based quantum computing device. **Fig. 2** shows an examplary functional block diagram of such a system 200 according to aspects disclosed herein. The system 200 comprises a trapping laser system 210 for trapping neutral atoms (e.g., ⁸⁸Sr atoms) in an optical trap array 110 inside a vacuum chamber 115 operated at a trapping wavelength, e.g., λₜᵣ = 813nm, 1050nm, 1000nm etc.

As exemplarily shown in **Fig. 3** each neutral atom comprises a ground state |¹Sₒ>, a first metastable excited state |³P₀> and a second metastable excited state |³P₂>. The system 200 further comprises an atomic state manipulation laser system 220 generating laser radiation 130 for coupling, via a phase-coherent multi-photon transition, the ground state |¹S₀> to the first metastable excited state |³P₀> or to the second metastable excited state |³P₂>. As exemplarily shown in **Fig. 3** for ⁸⁸Sr atoms the ground state |¹S₀> can be coupled to the first metastable excited state |³P₀> via a three-photon transition with wavelengths 689nm, 688nm, and 679nm, and to the second metastable excited state |³P₂> via a corresponding three-photon transition with wavelengths 689nm, 688nm, and 707nm. Similarly, the states |³P₀> and |³P₂> of the so-called fine structure qubit can be coupled via a two-photon Raman transition with wavelengths 679nm and 707nm. In this manner, the three states can be used to form a qutrit and / or pairs of qubits with different properties.

For example, implementing the |¹S₀> to |³P₀> and / or the |¹S₀> to |³P₂> coupling required for many quantum technologies is commonly done using a single light field with narrow linewidth. Driving the clock transitions under these conditions requires a strong magnetic quantization axis to boost the achievable Rabi frequency. Aspects of the present disclosure allows to overcome this constraint by realizing the coherent couplings with three phase-coherent light fields on a three-photon transition. In this case, the slow dipole-forbidden coupling on the clock transitions can be avoided and instead a coupling using dipole-allowed transitions via two intermediate excited states, ³P₁ and ³S₁ can be implemented. To avoid unwanted scattering from these intermediate states, a detuning can be used, which gives rise to an effective two-level description approximately equivalent to a direct drive.

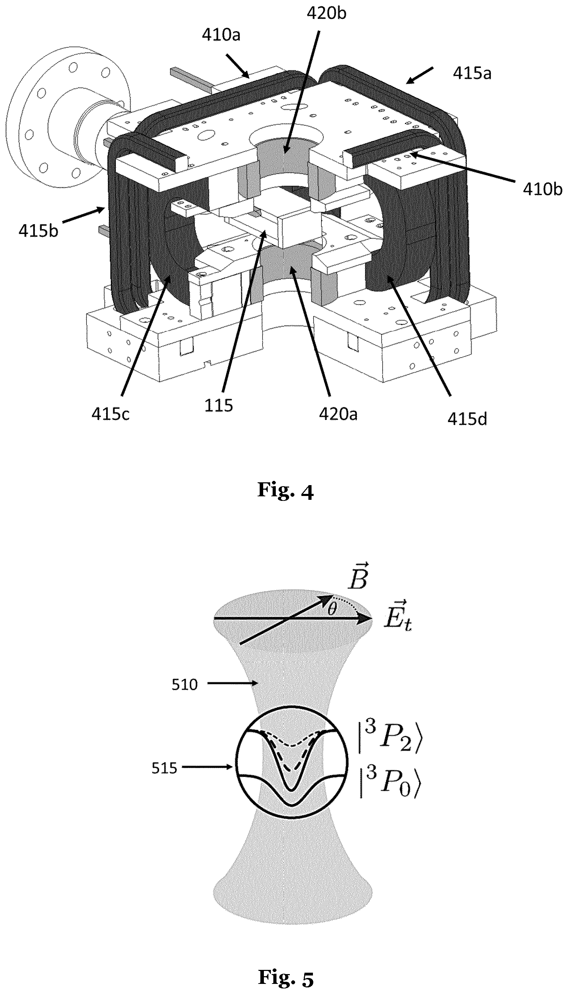

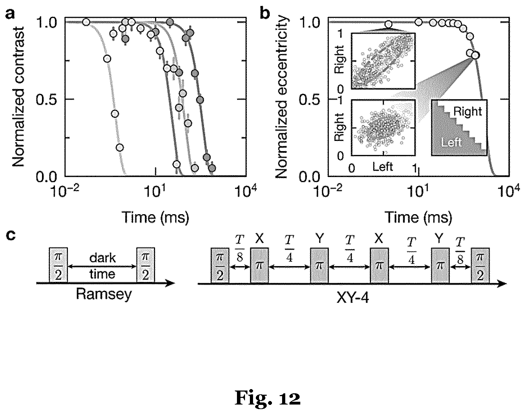

The relevant laser coupling schemes are also shown in **Fig. 6A** to **Fig. 6C**, e.g., the coupling from ¹S₀ to ³P₀ and the coupling from ¹S₀ to the ³P₂ mⱼ =0 magnetic substate. Additionally, under triple-magic conditions, the two clock states (³P₀, ³P₂ mⱼ =0) can be directly coupled with a coherent two-photon scheme, thereby forming a so-called fine structure qubit, which allows for high-speed and nearly recoil-free qubit rotations. Combined, this constitutes a qutrit with fast all-to-all coupling enabled by a combination of multi-photon transitions and tailored angle-tuned trapping potentials. Despite the non-scalar trapping potentials (illustrated by reference number 515 in **Fig. 5**), where local polarization imperfections may directly affect the differential light shift it is possible to obtain long coherence times for the fine structure qubit (see **Fig. 12**), demonstrating the applicability of the present disclosure for quantum technology applications. **Fig. 12** shows coherence measurements of the fine-structure qubit. An atom-atom coherence time of up to 1.4s can be realized using magic angle tuning in an optical tweezer array demonstrating the applicability of angle-tuned trapping potentials disclosed herein for coherent quantum technologies.

**Fig. 5** also illustrates that the two clock states in ⁸⁸Sr typically experience different energy shifts 515 when placed inside an optical trapping potential 510. Using a magnetic field B applied under a suitable angle θ with respect to the linearly polarized (Eₜ) trapping potentials, allows tuning of the differential energy shift to an essentially vanishing degree (see **Fig. 7** and **Fig. 8**).

As further shown in **Fig. 1**, the multi-wavelength laser radiation 130 (*Raman beams*) can be applied to the plurality of neutral atoms in the trap array 110 via a single single-mode, polarization maintaining optical fiber 135, that, preferably, is length and temperature stabilized. The system 200 may optionally further comprise multi-wavelength waveplates (not shown) which rotate the polarization of a first wavelength of the laser radiation 130 but leave a second wavelength essentially unaffected.

In this manner, using ⁸⁸SR atoms greatly simplifies hardware requirements and improves quantum protocol speed and fidelity. For example, in order to suppress differential phase noise all light fields can be applied via the same polarization maintaining optical fiber 135. Thereby, the optical path for the different light fields is shared which minimizes phase noise due to path-length fluctuations, relevant in particular inside the optical fiber 135. Driving three-photon transitions from the ground state to either of the clock states typically requires light fields with *ππ* and σ± polarization components. Under the constraint of common linear polarization, which is particularly simple to realize, it is possible to choose an angle of approximately 35° between the linear light polarization and the magnetic quantization axis provided by the magnetic field Bₑₓₜ, thereby maximizing the three-photon Rabi frequency. However, such parameter settings also may lower the two-photon coupling strength between the clock states in comparison to ideal settings for this transition. This limitation can be overcome by using tailored waveplates which rotate the polarization of the 688nm and 689nm light fields while leaving the polarization of the 679nm and 707nm light fields unaffected, for example. This provides a light field with linear polarization where the 679nm/707nm polarization is orthogonal to the 688nm/689nm polarization. This choice further boosts the three-photon Rabi frequency and simultaneously provides the optimal coupling strength between the fine-structure states. Such a design combines passive stability to achieve a low phase-noise light delivery with optimal polarization settings to maximize the optical coupling strength.

The system 200 further comprises a magnetic field system 230 for generating a magnetic field Bₑₓₜ at a location of the array of optical traps 110 inside the vacuum chamber 115 inducing a Zeeman splitting (shown in **Fig. 3**) for the magnetic substates of the second metastable excited state |³P₂>.

As mentioned above, for example, the long-lived clock states in ⁸⁸Sr are promising qubit candidates and require magic trapping conditions where the differential light shift between the qubit states vanishes. This either constrains the choice of the trapping wavelength or requires a specifically engineered trapping potential. Tuning of the differential polarizability can be achieved by applying the magnetic field Bₑₓₜ at a specific angle θ with respect to the linearly polarized trapping potentials (see **Fig. 5**). Tuning this angle arbitrarily in space requires a suitable arrangement of magnetic field coils (see coils 410a to 420b in **Fig. 4**). The achievable magnetic field strength is thus typically limited by the requirement to tune the field angle in space arbitrarily. This is problematic for applications that require a fast coupling of the qubit states, like quantum computing, where fast single photon coupling conventionally requires a strong magnetic field. The incompatibility of strong magnetic fields with arbitrary orientation limits the applicability of angle-tuned trapping potentials in neutral atoms quantum computers and similar systems.

Thus, in the system 200 described herein, a direction of the magnetic field Bₑₓₜ with respect to a polarization direction of the optical trap array is selected such as to render the array of optical traps operated at the trapping wavelength λₜᵣ a magic-wavelength optical trap for the second metastable excited state |³P₂> and the first metastable excited state |³P₀> and / or for the second metastable excited state |³P₂> and the ground state |¹S₀>. For example, as shown in **Fig. 5**, the optical trapping laser beams 510 may be propagating essentially vertically, e.g., through high-resolution objective 125 shown in **Fig. 1**, and may be linearly polarized. In such a configuration, as shown in **Fig. 5**, the magnetic field Bₑₓₜ and the polarization vector Eₜ of the optical trap array may have an angle θ that can be easily adjusted, e.g., by rotating the linear polarization of the trapping beam and / or by changing the direction of the magnetic field B, e.g., by changing the electric currents of one or more of the pairs of coils 410, 415, 420 shown in **Fig. 4** to be arranged around the vacuum chamber 115.

As mentioned above, using multi-photon transitions such as the example transitions shown for ⁸⁸Sr atoms in **Fig. 3** allows to overcome the limitations discussed above and to achieve fast optical coupling compatible with engineered e.g., angle-tune optical trapping potentials. Aspects of the present disclosure thus make use of fast multi-photon coupling schemes to implement the optical coupling between different atomic states, e.g., for the coupling schemes shown in **Fig. 6A** to **Fig. 6C****.** Using such multi-photon transitions driven by phase-coherent laser beams instead of single-photon transitions allows for fast coupling at low magnetic field strength ~ 10 G and moderate laser intensities. This combination constitutes a key advantage of the present disclosure, making fast optical coupling compatible with engineered e.g., angle-tuned optical trapping potentials. As shown in Such a technique has applications across a broad wavelength range (see **Fig. 7**).

**Fig. 7** shows magic angle condition for different wavelength. Trapping conditions with vanishing differential light shift can be realized for different states across a broad range of wavelength. At 813nm and an angle of ~78° triple-magic conditions can be realized to implement a qutrit as discussed above. In addition, the wavelengths with 90° magic angle are of interest to realize magic conditions simultaneously for different potentials which allows coherent qubit transport (see **Fig. 10**).

The system 200 further comprises a control system 240 for controlling the laser radiation 130 generated by the laser system 220 to coherently modify a quantum state of the plurality of neutral atoms based on the quantum manipulation protocol. For example, the following application scenarios may benefit from exploiting angle-tuned trapping potentials combined with fast multi-photon transitions.

First, as shown in **Fig. 3** an optical qutrit can be realized. For instance, in ⁸⁸Sr the ¹S₀ ground state and the well-known ³P₀ clock state can be magically trapped at 813 nm. Using a magnetic field with moderate strength (on the order of 10 G) applied under an angle of approximately 78° simultaneous magic-wavelength conditions can be realized for the internal states discussed above (see **Fig. 8**). This offers new possibilities in quantum computing which can exploit the fast coupling of the fine-structure states and the exceptionally long coherence times of the clock qubit states, e.g., by dynamically mapping quantum information onto different qubits for different parts of a quantum algorithm. To overcome the technically challenging generation of a strong magnetic field under magic conditions, the fast multi-photon coupling schemes disclosed herein are employed.

**Fig. 8** also shows a triple-magic angle measurement at a wavelength of 813nm. For a magnetic field angle of approximately 78° with respect to the linearly polarized trapping potential the differential light shifts between the states discussed above vanish.

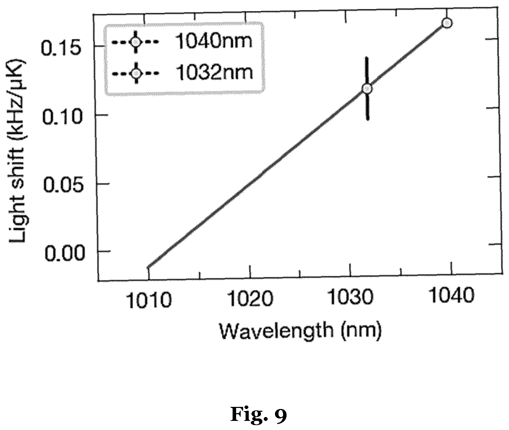

Second, a magic lattice setup can be implemented. For specific wavelengths between 1000 and 1020nm (see **Fig. 9**) magic trapping conditions can be realized for an angle of 90° between the magnetic field and the trap polarization. Such an arrangement offers additional flexibility. Considering a vertically polarized optical lattice in a power-efficient "folded" configuration (shown in **Fig. 10**) it is possible to realize simultaneous magic-wavelengths conditions for the optical lattice 1010 and the addressing beams 1020. In particular, these wavelengths may be within the range of high-power laser amplifiers, which ease the scalability of this approach to large quantum registers.

**Fig. 9** shows measurements indicating IR wavelengths suitable for high-fidelity low-loss imaging at the 90° magic wavelength for the fine-structure qubit in ⁸⁸Sr. In addition this allows for long trapping lifetimes.

**Fig. 10** illustrates a combination of the trapping and addressing optics. A magic lattice 1010 at the 90° magic wavelength can be applied in the horizontal plane with vertical polarization realizing a power-efficient and scalable trapping potential inside the vacuum chamber 115. Using the top or bottom objective addressing tweezers optical lattice (at 90° magic wavelength) resorting/addressing tweezers 1020 array for trapping can be applied which simultaneously satisfy magic trapping conditions and are therefore suitable for coherent qubit transport. Coupling the qubit states under magic trapping conditions (which constrains the magnetic field) is implemented with fast multi-photon transitions.

Thirdly, a coherent depumping scheme can be implemented, e.g., for multi-photon laser cooling. To this end a two-photon coherent depumping via the 3P1 state can be employed using the same lasers involved in the coupling 3P1-3S1-3P2 (or 3P1-3S1-3P0). This can allow for controlled qubit reset in the fine-structure qubit or in the clock qubit with minimal additional heating of the motional degrees of freedom. This has applications in designing special quantum error correction schemes as well as fast laser cooling of large-scale atomic arrays in variety of trap settings, including those where 1S0 and 3P1 are non-magic.

Going beyond the cases discussed above aspects of the present disclosure provide further advantages for engineered trapping potentials if the magic angle is > 45°. In these cases it is possible to realize simultaneous magic trapping conditions for two orthogonally polarized traps by applying the magnetic field under a suitable angle out of the plane spanned by the polarization of the traps. This opens the possibility to power-efficiently combine trapping light on polarizing beam splitters, e.g., to combine the light from a spatial light modulator with an acousto-optic deflector before focusing them with a high-resolution objective. The fast multi-photon coupling scheme requires phase-coherent light fields which have to be delivered to the atomic ensemble without inducing additional phase noise. Low relative phase noise is crucial for the high-fidelity operation of single-qubit gates driven by multi-color light fields. The present disclosure thus allows to design a simple optical setup to phase-coherently deliver multi-photon light fields using a combination of passively stable elements and identify the optimal laser polarization for this setup.

As further shown in **Fig. 2**, the system 200 may comprise a quantum state readout system 250 for determining the quantum state of at least a subset of the plurality of alkaline earth atoms based on the quantum manipulation protocol, e.g., via state-resolved fluorescence imaging using the lower high-resolution objective 145 shown in **Fig. 1****.**

In some cases, the neutral atoms may be alkaline earth atoms such as ⁸⁸Sr atoms. Further, as discussed above, the angle θ is selected between 78° and 79°, and the wavelength λₜᵣ of the array of optical tweezer traps is selected to be 813 nm. Further, the polarization direction of the optical trap array may be essentially vertical, the angle θ may be selected between 89° and 91°, preferably 90°, and the wavelength λₜᵣ of the optical trap array may be selected to be between 1000 nm and 1020 nm.

Further, the optical trap array my be formed by an optical lattice, preferably by a folded optical lattice, and / or the system 200 may further comprise one or more auxiliary optical traps having an auxiliary trap wavelength λₐᵤₓ and a polarization direction that is essentially horizontal, wherein the auxiliary trap wavelength λₐᵤₓ and the polarization direction of the one or more auxiliary optical traps with respect to the direction of the magnetic field Bₑₓₜ are selected such that a differential light shift induced by the one or more auxiliary optical traps on the second metastable excited state with respect to the first metastable excited state or with respect to the ground state or with respect to both does not affect a fidelity of the quantum manipulation protocol.

As mentioned above, the laser radiation generated by the state manipulation laser system 220 may be applied to the plurality of neutral atoms via a single single-mode, polarization maintaining optical fiber, that, preferably, is length and temperature stabilized; the system optionally further comprising multi-wavelength waveplates which rotate the polarization a first wavelength of the laser radiation but leave a second wavelength essentially unaffected.

The present disclosure also relates to a neutral atom quantum computer comprising the system as discussed above and an interface, for receiving, via a network 270 from a remote user device 260, instructions of a quantum algorithm, and for sending, via the network, a result of the quantum algorithm to the remote user device.

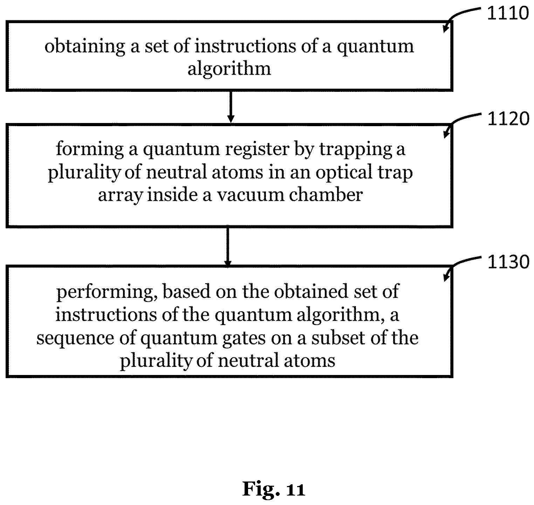

**Fig. 11** shows a method for quantum computing comprising obtaining 1110 a set of instructions of a quantum algorithm, forming 1120 a quantum register by trapping a plurality of neutral atoms in an optical trap array inside a vacuum chamber, wherein a ground state, a first metastable excited state and a second metastable excited state of the neutral atoms form a qutrit and / or qubits used for quantum computing, and performing 1130, based on the obtained set of instructions of the quantum algorithm, a sequence of quantum gates on a subset of the plurality of neutral atoms. As discussed above for the operation of the system 200 of **Fig. 2**, performing the sequence of quantum gates comprises generating a magnetic field Bₑₓₜ at a location of the optical trap array for inducing a Zeeman splitting for magnetic sub-states of the second metastable excited state, and illuminating the subset of the plurality of neutral atoms with laser radiation coupling, via a multi-photon transition, the ground state to the first meta-stable excited state, and / or the ground state to the second metastable excited state.

In some implementations, the method may further comprise applying two-photon coherent depumping for controlled qubit state reset and, optionally, laser cooling the plurality of neutral atoms in an optical trap array based at least in part on applying the two-photon coherent depumping for the controlled qubit state reset. For example, multi-photon coherent side-band cooling may be implemented by the coherent depumping.

In some implementations, the method may further comprise obtaining, via a network form a remote user device, the set of instructions of the quantum algorithm, and sending a result of the quantum algorithm via the network to the remote user device, e.g., to perform quantum computing as a service via the internet.

The scientific publication Maximilian Ammenwerth et al. Realization of a fast triple-magic all-optical qutrit in 88Sr, arXiv:2411.0286901 [physics.atom-ph] submitted on 5 Nov 2024 and published on 6 Nov 2024 contains further implementations details of the present disclosure. To avoid redundancies it is incorporated by reference in its entirety and forms an integral part of the present disclosure.

The foregoing disclosure provides illustration and description but is not intended to be exhaustive or to limit the aspects to the precise form disclosed. Modifications and variations may be made in light of the above disclosure or may be acquired from practice of the aspects. As used herein, the term component is intended to be broadly construed as hardware, firmware, or a combination of hardware and software. As used herein, a processor is implemented in hardware, firmware, or a combination of hardware and software.

It will be apparent that systems and/or methods described herein may be implemented in different forms of hardware, firmware, or a combination of hardware and software. The actual specialized control hardware or software code used to implement these systems and/or methods is not limiting of the aspects. Thus, the operation and behavior of the systems and/or methods were described herein without reference to specific software code-it being understood that software and hardware can be designed to implement the systems and/or methods based on the description herein.

Even though particular combinations of features are recited in the claims and/or disclosed in the specification, these combinations are not intended to limit the disclosure of various aspects. In fact, many of these features may be combined in ways not specifically recited in the claims and/or dis-closed in the specification. Although each dependent claim listed below may directly depend on only one claim, the disclosure of various aspects includes each dependent claim in combination with every other claim in the claim set. A phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

No element, act, or instruction used herein should be construed as critical or essential unless explicitly described as such. Also, as used herein, the articles "a" and "an" are intended to include one or more items, and may be used interchangeably with "one or more." Furthermore, as used herein, the terms "set" and "group" are intended to include one or more items (e.g., related items, unrelated items, a combination of related and unrelated items, and/or the like), and may be used interchange-ably with "one or more." Where only one item is intended, the phrase "only one" or similar language is used. Also, as used herein, the terms "has," "have," "having," and/or the like are intended to be open-ended terms.

As used herein, the phrase "based on" shall not be construed as a reference to a closed set of information, one or more conditions, one or more factors, or the like. In other words, the phrase "based on A" (where "A" may be information, a condition, a factor, or the like) shall be construed as "based at least on A" unless specifically recited differently.

As used herein, the term "or" is an inclusive "or" unless limiting language is used relative to the alternatives listed. For example, reference to "X being based on A or B" shall be construed as including within its scope X being based on A, X being based on B, and X being based on A and B. In this regard, reference to "X being based on A or B" refers to "at least one of A or B" or "one or more of A or B" due to "or" being inclusive. Similarly, reference to "X being based on A, B, or C" shall be construed as including within its scope X being based on A, X being based on B, X being based on C, X being based on A and B, X being based on A and C, X being based on B and C, and X being based on A, B, and C. In this regard, reference to "X being based on A, B, or C" refers to "at least one of A, B, or C" or "one or more of A, B, or C" due to "or" being inclusive. As an example of limiting language, reference to "X being based on only one of A or B" shall be construed as including within its scope X being based on A as well as X being based on B, but not X being based on A and B.

Further, process diagrams such as **Fig. 11** do not necessarily indicate a particular order or sequence of steps. For example, steps may also be performed in a different order or, if hardware capabilities allow it, simultaneously, without deviating from the scope of the present disclosure.

## Claims

1. System (200) for performing a quantum manipulation protocol, comprising:
a trapping laser system (210) for trapping neutral atoms in an optical trap array (110) inside a vacuum chamber (115) operated at a trapping wavelength λₜᵣ; wherein each neutral atom comprises a ground state |¹S₀>, a first metastable excited state |³P₀> and a second metastable excited state |³P₂>;
a state manipulation laser system (220) for generating laser radiation (130) for coupling, via a phase-coherent multi-photon transition, the ground state |¹S₀> to the first metastable excited state |³P₀> and / or to the second metastable excited state |³P₂>;
a magnetic field system (230) for generating a magnetic field Bₑₓₜ at a location of the optical trap array inducing a Zeeman splitting for magnetic substates of the second metastable excited state |³P₂>;
a control system (240) for controlling the laser radiation generated by the laser system to coherently modify a quantum state of the plurality of neutral atoms based on the quantum manipulation protocol;
a quantum state readout system (250) for determining the quantum state of at least a subset of the plurality of neural atoms based on the quantum manipulation protocol;
wherein a direction of the magnetic field Bₑₓₜ with respect to a polarization direction of the optical trap array is selected such as to render the optical trap array operated at the trapping wavelength λₜᵣ a magic-wavelength optical trap for the second metastable excited state |³P₂> and the first metastable excited state |³P₀> and / or for the second metastable excited state |³P₂> and the ground state |¹S₀>.

2. System of claim 1,
wherein the direction and a strength of the magnetic field Bₑₓₜ, the polarization direction of the optical trap array, and the wavelength λₜᵣ of the optical trap array are selected such that a differential light shift induced by the optical trap array on the second metastable excited state |³P₂> with respect to the first metastable excited state |³P₀> or with respect to the ground state |¹S₀>, or with respect to both states affects a fidelity of a single particle quantum operation of the quantum manipulation protocol by less than 10%, preferably by less than 5% and more preferably by less than 1%.

3. System of claim 2, wherein an angle θ between the polarization direction of the optical trap array and the direction of the magnetic field Bₑₓₜ is selected such that, for a given trapping wavelength λₜᵣ of the optical trap array, the differential light shift induced by the optical trap array on the second metastable state with respect to the first metastable state or with respect to the ground state or with respect to both states affects a fidelity of a single particle quantum operation of the quantum manipulation protocol by less than 10%, preferably by less than 5% and more preferably by less than 1%.

4. System of claim of any of claims 1 to 3,
wherein the neutral atoms are ⁸⁸Sr atoms.

5. System of claim 4, dependent on claim 3, wherein the angle θ is selected between 78° and 79°, and the wavelength λₜᵣ of the optical trap array is selected to be 813 nm.

6. System of claim 4, dependent on claim 3, wherein the polarization direction of the optical trap array is essentially vertical, the angle θ is selected between 89° and 91°, preferably 90°, and the wavelength λₜᵣ of the optical trap array is selected to be between 1000 nm and 1020 nm.

7. System of claim 6,
wherein the optical trap array is formed by an optical lattice, preferably by a folded optical lattice; and / or the system further comprising:
one or more auxiliary optical traps having an auxiliary trap wavelength λₐᵤₓ and a polarization direction that is essentially horizontal;
wherein the auxiliary trap wavelength λₐᵤₓ and the polarization direction of the one or more auxiliary optical traps with respect to the direction of the magnetic field Bₑₓₜ are selected such that a differential light shift induced by the one or more auxiliary optical traps on the second metastable excited state with respect to the first metastable excited state or with respect to the ground state or with respect to both does not affect a fidelity of the quantum manipulation protocol.

8. System of any of claims 1 to 7, wherein the laser radiation generated by the atomic state manipulation laser system is applied to the plurality of neutral atoms via a single single-mode, polarization maintaining optical fiber, that, preferably, is length and temperature stabilized; the system optionally further comprising multi-wavelength waveplates which rotate the polarization a first wavelength of the laser radiation but leave a second wavelength essentially unaffected.

9. Neutral atom quantum computer comprising the system of any of claims 1 to 8, and optionally:
an interface, for receiving, via a network (270) from a remote user device (260), instructions of a quantum algorithm, and for sending, via the network, a result of the quantum algorithm to the remote user device.

10. Method for quantum computing comprising:
obtaining (1110) a set of instructions of a quantum algorithm;
forming (1120) a quantum register by trapping a plurality of neutral atoms in an optical trap array inside a vacuum chamber;
wherein a ground state, a first metastable excited state and a second metastable excited state of the neutral atoms form a qutrit and / or qubits used for quantum computing;
performing (1130) , based on the obtained set of instructions of the quantum algorithm, a sequence of quantum gates on a subset of the plurality of neutral atoms, wherein performing the sequence of quantum gates comprises
generating a magnetic field Bₑₓₜ at a location of the optical trap array for inducing a Zeeman splitting for magnetic sub-states of the second metastable excited state; and
illuminating the subset of the plurality of neutral atoms with laser radiation coupling, via a multi-photon transition, the ground state to the first meta-stable excited state, and / or the ground state to the second metastable excited state.

11. Method of claim 10, further comprising:
applying two-photon coherent depumping for controlled qubit state reset.

12. Method of claim 11, further comprising
laser cooling the plurality of neutral atoms in an optical trap array based at least in part on applying the two-photon coherent depumping for the controlled qubit state reset.

13. Method of any of claims 10 to 12, further comprising
obtaining, via a network form a remote user device, the set of instructions of the quantum algorithm; and
sending a result of the quantum algorithm via the network to the remote user device.

14. Computer program comprising instructions for controlling a quantum computing device to carry out the steps of the method of any of claims 10 to 13.
